(19) Europäisches Patentamt / European Patent Office / Office européen des brevets

(11) EP 3 896 651 A1

(12) # EUROPEAN PATENT APPLICATION

(43) Date of publication:
**20.10.2021 Bulletin 2021/42**

(21) Application number: **20204764.3**

(22) Date of filing: **29.10.2020**

(51) Int Cl.:
*G06T 7/11 (2017.01)* *G06T 7/215 (2017.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2020 DE 102020204787**

(71) Applicant: **VOLKSWAGEN AG**
**38440 Wolfsburg (DE)**

(72) Inventors:
- **Hüger, Fabian**
  **38302 Wolfenbüttel (DE)**
- **Schlicht, Peter**
  **38442 Wolfsburg (DE)**
- **Varghese, John Serin**
  **38126 Braunschweig (DE)**
- **Kapoor, Nikhil**
  **38440 Wolfsburg (DE)**

(54) **METHOD AND APPARATUS FOR EVALUATING TEMPORAL CHARACTERISTICS OF SEMANTIC IMAGE SEGMENTATION**

(57) The present invention is related to a method, a computer program, and an apparatus for evaluating temporal characteristics of semantic image segmentation, in particular for detecting perception instabilities on temporally sequential images of a video sequence. The invention is further related to an in-car control unit or a backend system, which make use of such a method or apparatus, and to a vehicle comprising such an in-car control unit. In a first step, image data of two sequential image frames are received (10). Then semantic segmentation predictions for each of the two sequential image frames are determined (11). Displacements between the image data of the two sequential image frames are estimated (12). The estimated displacements are applied (13) to the semantic segmentation prediction of the first of the two sequential image frames to generate an expected semantic segmentation prediction for the second of the two sequential image frames. The semantic segmentation prediction of the second of the two sequential image frames is evaluated (14) based on the expected semantic segmentation prediction for the second of the two sequential image frames.

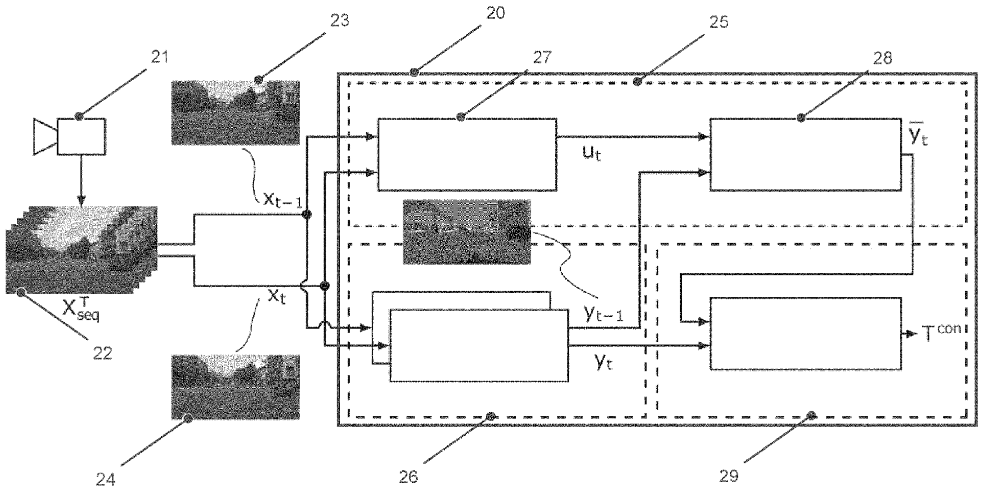


FIG. 2



Printed by Jouve, 75001 PARIS (FR)

## Description

The present invention is related to a method, a computer program, and an apparatus for evaluating temporal characteristics of semantic image segmentation, in particular for detecting perception instabilities on temporally sequential images of a video sequence. The invention is further related to an in-car control unit or a backend system, which make use of such a method or apparatus, and to a vehicle comprising such an in-car control unit.

The success of deep neural networks in computer vision and pattern recognition tasks makes them a promising technology for a wide variety of applications, including highly automated driving perception systems. There have been many improvements in vision-related tasks such as image classification, object detection, and semantic segmentation.

Semantic segmentation networks perform pixel-wise classification of input images into a set of predefined semantic classes. For both training and evaluation, so-called ground truth labels are necessary, which may be considered as the ideal expected result and are usually considered expensive to obtain since they might involve complex methods such as hand-labeling example data points or image points.

In order to assess the quality of semantic segmentation models, metrics such as mean intersection over union (mIoU) are commonly used. They give an estimate of how accurately the output pixels are assigned to their respective semantic classes on a pre-defined test set of images. This test set is designed such that it consists of individual frames, which are considered to represent the diversity of scenes and objects seen in the real world. However, since mIoU operates on individual frames and does not contain any time component, this metric fails to capture temporal characteristics of video sequences. Due to this, although this is a well-known technique to measure the quality of semantic segmentation networks, this does not cover all aspects of video segmentation qualities.

It is known to calculated consistency over a complete video sequence based on a large displace optical flow approach, as described in "Dense Point Trajectories by GPU-Accelerated Large Displacement Optical Flow", Sundaram N., Brox T., Keutzer K., European Conference on Computer Vision (ECCV) 2010, pp 438-451, vol 6311. Springer, Berlin, Heidelberg. In this approach, a consistent track is a track where all the pixels along the track have the same label assigned by the predictions of the semantic segmentation network and consistency is the percentage of consistent tracks across the complete video sequence. However, this approach neither allows for real time usage nor captures instantaneous inconsistencies.

Furthermore, an approach to long-range spatio-temporal regularization in semantic video segmentation is presented in "Feature Space Optimization for Semantic Video Segmentation", A. Kundu, V. Vineet, and V. Koltun., Proc. of Computer Vision and Pattern Recognition (CVPR) 2016, pp. 3168-3175, Las Vegas, NV, USA, June 2016.

Finally, US 2019/0225234 A1 discloses to detect an anomalous image associated with image data from one or more cameras of a computer-aided or autonomous driving vehicle. A consistency check is performed on pixel-level data to determine whether the image data includes an anomalous image. A combined weighted value is determined weights assigned to an output of one or more consistency checks, such as a multi-view consistency check, single-view consistency check, temporal consistency check, and/or multi-modal consistency check, wherein the weights are computed empirically or learned during training of a neural network.

It is an object of the present invention to provide improved solutions for evaluating temporal characteristics of semantic image segmentation.

This object is achieved by a method according to claim 1, by a computer program according to claim 11, which implements this method, and by an apparatus according to claim 12. The object is further achieved by an in-car control unit according to claim 13, a backend system according to claim 14 and a vehicle according to claim 15.

The dependent claims include advantageous further developments and improvements of the present principles as described below.

According to a first aspect, a method for evaluating temporal characteristics of semantic image segmentation comprises:

- receiving image data of two sequential image frames;
- determining semantic segmentation predictions for each of the two sequential image frames;
- estimating displacements between the image data of the two sequential image frames;
- applying the estimated displacements to the semantic segmentation prediction of the first of the two sequential image frames to generate an expected semantic segmentation prediction for the second of the two sequential image frames; and
- evaluating the semantic segmentation prediction of the second of the two sequential image frames based on the expected semantic segmentation prediction for the second of the two sequential image frames.

Accordingly, a computer program comprises instructions, which when executed a computer, cause the computer to perform the following steps for evaluating temporal characteristics of semantic image segmentation:

- receiving image data of two sequential image frames;
- determining semantic segmentation predictions for each of the two sequential image frames;
- estimating displacements between the image data of the two sequential image frames;
- applying the estimated displacements to the semantic segmentation prediction of the first of the two sequential image frames to generate an expected semantic segmentation prediction for the second of the two sequential image frames; and
- evaluating the semantic segmentation prediction of the second of the two sequential image frames based on the expected semantic segmentation prediction for the second of the two sequential image frames.

The term computer has to be understood broadly. In particular, it also includes workstations, distributed system, embedded devices and other processor-based data processing devices.

The computer program can, for example, be made available for electronic retrieval or stored on a computer-readable storage medium.

According to another aspect, an apparatus for evaluating temporal characteristics of semantic image segmentation comprises:

- an input configured to receive image data of two sequential image frames;
- a semantic segmentation module configured to determine semantic segmentation predictions for each of the two sequential image frames;
- an image propagation module configured to estimate displacements between the image data of the two sequential image frames and to apply the estimated displacements to the semantic segmentation prediction of the first of the two sequential image frames to generate an expected semantic segmentation prediction for the second of the two sequential image frames; and
- an evaluating module (29) configured to evaluate the semantic segmentation prediction of the second of the two sequential image frames based on the expected semantic segmentation prediction for the second of the two sequential image frames.

The solution according to the invention provides a framework to reliably evaluate temporal characteristics of semantic image segmentation and accurately capture instantaneous instabilities. This allows to measure instabilities and estimate performance of deep neural networks working on sequential image and/or depth data. Furthermore, the present solution may run in real-time in parallel to existing perception modules to detect unstable situations. This is particularly helpful for safety-critical applications such as highly automated driving.

In an advantageous embodiment, estimating the displacements comprises determining for each pixel a two-dimensional pixel-wise displacement from the first of the two sequential image frames to the second of the two sequential image frames; and wherein these pixel-wise displacements are applied to the pixel coordinates of the segmentation output to generate the expected semantic segmentation prediction.

In an advantageous embodiment, the two sequential image frames are two immediately consecutive images of a video sequence.

In an advantageous embodiment, evaluating the semantic segmentation prediction comprises calculating a value of the instantaneous temporal consistency of the semantic segmentation predictions of the two sequential image frames.

In an advantageous embodiment, calculating the instantaneous temporal consistency comprises calculating the mean intersection over union between the semantic segmentation prediction of the second of the two sequential image frames and the expected semantic segmentation prediction for the second of the two sequential image frames.

In an advantageous embodiment, a value for the mean temporal consistency is calculated for several pairs of consecutive images in a video sequence based on the individual values of instantaneous temporal consistency.

In an advantageous embodiment, the method further comprises comparing the value for the mean temporal consistency with a threshold value.

In an advantageous embodiment, the semantic segmentation predictions are used in a perception system for automated driving functions of a vehicle if the value for the mean temporal consistency exceeds the threshold value.

In an advantageous embodiment, at least one of the following actions is performed:

- discarding the current semantic segmentation predictions;
- adding an uncertainty value for the further processing;
- relying on another component for perception in the vehicle;
- identifying perception errors;

if the value for the mean temporal consistency is lower than the threshold value.

In an advantageous embodiment, image frames or video sequences with a value for the mean temporal consistency being lower than the threshold value are identified for human labeling or as training data with critical temporal consistency.

Advantageously, an in-car control unit may comprise an apparatus according to the invention or may be configured to perform a method according to the invention. Such a system may preferably be used in a vehicle, particularly an autonomous or semi-autonomous vehicle. The vehicle may be any type of vehicle, e.g. a car, a bus, a motorcycle, a commercial vehicle, in particular a truck, an agricultural machinery, a construction machinery, a rail vehicle, etc. More generally, the invention can be used in land vehicles, rail vehicles, watercrafts, and aircrafts.

Furthermore, a backend system may comprise an apparatus according to the invention or may be configured to perform a method according to the invention.

Further features of the present invention will become apparent from the following description and the appended claims in conjunction with the figures.

Fig. 1 schematically illustrates a method for evaluating temporal characteristics of semantic image segmentation;

Fig. 2 schematically illustrates a block diagram of an apparatus evaluating temporal characteristics of semantic image segmentation;

Fig. 3 schematically illustrates a block diagram of a vehicle using the invention; and

Fig. 4 schematically illustrates a backend system where temporal consistency is used for selecting additional training data.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

Figure 1 schematically illustrates a method according to the invention for evaluating temporal characteristics of semantic image segmentation. In particular, a metric for semantic segmentation models is calculated, which measures the stability of semantic segmentation predictions on image sequences and is called temporal consistency TC in the following. In particular, the images of the image sequence can correspond to images of a video sequence captured by a video camera. However, the images may also correspond to consecutive images of a LiDAR sensor which uses ultraviolet, visible, or near infrared light to image objects or to images provided by an other image-generating sensor.

The basis of this temporal consistency is that a well-working semantic segmentation network should produce similar predictions between two frames in a video stream. Similar, because in a video sequence there is little variation between consecutive frames, if there are no interruptions of the video stream and if the frame rate of the video stream is sufficiently high. In particular, there should be a continuity of objects in consecutive frames, this means that objects do not usually appear or disappear suddenly in consecutive frames, except an object suddenly appears from behind an occlusion or disappears behind that occlusion.

The variation in the image content depends on two aspects: the movement of objects in the captured video, and the translational and rotational movement of the camera. Taking a simple difference between two predictions of consecutive frames does not take into consideration these variations. However, predictions of the video segmentations are stable if these variations are compensated.

Initially, the image data are received in a first step 10 of the method. In particular, sequential image frames of a video sequence captured by a camera may be provided to the further steps of the inventive method, possibly after a video preprocessing to get rid of artifacts, suppress noise etc. Different kinds of cameras can be used for capturing the video sequence, such as 2D or 3D cameras or cameras using different parts of the light spectrum, as long as the frame rate of the used camera is sufficiently high. However, as mentioned above, the inventive method can also be applied to other kinds of images such as LiDAR images or radar images or even in parallel to such different kinds of images provided from several sensors.

The captured and possibly preprocessed image frames may be directly provided to the further steps in case of real-time processing, for example, when the method is implemented in a perception module of a vehicle with automated driving functions. However, in an offline mode the captured image frames may also by stored in a database and later on retrieved from this database for the inventive processing of the data.

In step, 11 semantic segmentation predictions are determined for two consecutive sequential image frames based on a semantic segmentation model F. In general terms an image frame x of height H, width W, number of color channels C = 3, and pixel intensities G = {0, 1, 2, ... , 255} is defined as $x \in G^{H \times W \times C}$. The unlabeled video sequence of consecutive images of length T is $x_1^T = (x_1, \ldots, x_T)$, with $x_t$ being an image of this sequence at discrete time instant $t \in T = \{1, 2, \ldots, T\}$. With $y_t = F(x_t)$ the prediction of the semantic segmentation network is denoted, where $y_t \in S^{H \times W}$ and S = {1, 2, ... , S} where S is the number of classes in the dataset. Thus, $y_{t-1}$ and $y_t$ are the predictions of consecutive images $x_{t-1}$ and $x_t$, respectively.

In step, 12 displacements between the image data of the two sequential image frames are estimated. For this purpose, optical flow approaches can be used to accurately model the movement of the pixels between the two image frames. This maps both, the movement of the objects in the video and also the movement of the camera.

The optical flow estimates the displacement of each pixel between the consecutive frames $x_{t-1}$ and $x_t$. The computed optical flow between $x_{t-1}$ and $x_t$ is defined as a tensor $u_t \in U^{H \times W}$, where U is the set of two-dimensional pixel-wise displacements (u, v), representing the coordinate-wise shift of each pixel from $x_{t-1}$ to $x_t$. Using this, the image frame at time t-1 can be warped to the image frame at time t.

In step 13, the estimated displacements are applied to the semantic segmentation prediction of the first of the two sequential image frames to generate an expected semantic segmentation prediction for the second of the two sequential image frames.

For this purpose, the pixel-wise displacements resulting from the optical flow calculation are applied to the pixel coordinates of the segmentation output $y_{t-1}$. This way, an expected segmentation output $\hat{y}_t$ is generated based on the calculated optical flow, representing the pixel-wise shifts from $x_{t-1}$ to $x_t$.

In more detail, the derived optical flow tensor ut calculated between xt and $x_{t-1}$ is used to warp the prediction of the semantic segmentation network $y_{t-1}$ from time t-1 to time t. To do this, pixel coordinates for an image are defined as tensor $p \in P^{H \times W}$, where P is the set of pixel positions (or index pairs) (i, j) with $i \in \{1, \ldots, H\}$ and $j \in \{1, \ldots, W\}$. Tensor p thus only contains the pixel-wise coordinates of a pixel in an image and does not carry any information about pixel intensity values. The pixel-wise displacement vectors ut can be added to the original pixel positions p to receive a tensor

$$p_{t-1 \rightarrow t} = p + u_t, \qquad (1)$$

which provides the new pixel coordinates.

Subsequently, $p_{t-1 \rightarrow t}$ is applied to the segmentation output $y_{t-1}$. As the pixel coordinates $p_{t-1 \rightarrow t}$ are non-integer numbers, nearest neighbour sampling nearest() can be used to obtain valid integer coordinates for mapping of $y_{t-1}$ to the flow-based estimate $\hat{y}_t$ using $p_{t-1 \rightarrow t}$. That is, $y_{t-1}$ is warped to $\hat{y}_t$ by

$$\hat{y}_t = \text{nearest}(y_{t-1}, p_{t-1\rightarrow t}). \quad (2)$$

Accordingly, $\hat{y}_t$ is the expected prediction at time t based on the optical flow and conditioned on the change in the pair of inputs $x_{t-1}$ and $x_t$, which compensates for the movement of the camera and the objects in the consecutive frames.

In step 14, the semantic segmentation prediction of the second of the two sequential image frames is evaluated based on the expected semantic segmentation prediction for the second of the two sequential image frames. In particular, the temporal consistency TC of the semantic segmentation prediction can be calculated, which allows to determine the instantaneous stability of the network's predictions.

Ideally, for a good semantic segmentation model, the distance between the network output $y_t$ and the prediction based on the optical flow $\hat{y}_t$ should be small. Correspondingly, an instantaneous temporal consistency of semantic segmentation predictions is defined as

$$TC_t = \text{mIoU}(y_t, \hat{y}_t), \quad (3)$$

calculating the mean intersection over union between $y_t$ and $\hat{y}_t$, where mIoU = 1 indicates that both completely overlap.

This calculation can be done on all pairs of consecutive images in a video sequence. Subsequently, if a single metric value is desired, the mean temporal consistency is obtained by

$$mTC = \frac{1}{T'-1} \sum_{t=2}^{T'} TC_t \quad (4)$$

where T' is the number of frames in the video sequence. The mean temporal consistency metric mTC therefore indicates the stability of the predictions of a semantic segmentation model by motion flow calculations, given a video sequence, without requiring labels.

The mean intersection over union $mIoU_t$ at time t is defined as

$$mIoU_t = \frac{1}{S} \sum_{s \in S} \frac{TP_t(s)}{TP_t(s) + FP_t(s) + FN_t(s)} = \text{mIoU}(y_t, \hat{y}_t) \quad (5)$$

where $TP_t(s)$, $FP_t(s)$ and $FN_t(s)$ are the class-specific true positives, false positives, and false negatives, respectively, computed only for segmentation output $y_t$. The mean intersection over union (mIoU) is defined as

$$mIoU = \frac{1}{T'} \sum_{t=1}^{T'} mIoU_t \quad (6)$$

While the actual evaluation of the temporal characteristics of the semantic image segmentation is finished with step 14, the outcome can be used for further processing steps of various applications. Two exemplary applications are the use in (1) a control unit of a car for an online component observation or in (2) a backend system to select data for offline training or test cases. Both exemplary applications are briefly described in the following.

For both, the value of the mean temporal consistency is compared with a threshold value in step 15. Depending on the result of the comparison further steps 16 and 17 are undertaken:

In case of the car control unit a vehicle with automated driving or driver assistance functions may use the semantic segmentation predictions in a perception system of a so-called observer for the vehicle environment, depending on the value for the mean temporal consistency. The observer may work in parallel to further perception modules of the vehicle. If this value exceeds the threshold value, correct semantic segmentation of the image frames and thus correct identification of objects is likely and the semantic segmentation predictions are used in a further step 16 for the automated driving or driver assistance functions.

On the other hand, if the value of the mean temporal consistency is lower than the threshold, in step 17 the perception system may discard the current prediction of the component, add an uncertainty to be handled by the following component or rely on another component for perception.

Furthermore, the measured temporal consistency or parameters derived from this value can be used to identify perception errors, e.g. false negative / false positive detections or misclassifications and enable an according system reaction. In addition, further information such as speed, location, weather from additional sources can be taken into account.

In this way, safety of the vehicle when using automated driving or driver assistance functions can be increased.

Also for the application in a backend system, the semantic segmentation predictions may be used depending on the value for the mean temporal consistency.

At present, there is a severe lack of video semantic segmentation datasets offering a large number of high-quality annotated images. Furthermore, labelling long video sequences is also expensive and does not produce major improvements for the neural networks as the diversity of the dataset is not large enough for the network to generalize from during training.

However, with the inventive method even for a large database of unlabeled sequential image data, such image frames or video sequences with temporal consistency values lower than a threshold can be easily identified for human labeling or as important test case.

Figure 2 schematically illustrates a block diagram of an apparatus 20 according to the invention for evaluating temporal characteristics of semantic image segmentation. The apparatus 20 receives image data from the video camera 21 which captures for a road scene a video sequence 22 of image frames $X_{seq}^{T}$. Two consecutive image frames $x_{t-1}$ at time t-1 with image content 23 and $x_t$ at time t with image content 24 are provided to inputs of the apparatus 20. More in detail, both image frames $x_{t-1}$ and $x_t$. are fed to an image propagation module 25 and to a semantic segmentation module 26. In image propagation module 25 an optical flow submodule 27 computes the optical flow between $x_{t-1}$ and $x_t$ corresponding to the displacement of each pixel between the consecutive frames $x_{t-1}$ and $x_t$ and provides the calculated optical flow value $u_t$ to the subsequent image warping submodule 28.

In semantic segmentation module 26 the semantic segmentation predictions $y_{t-1}$ and $y_t$ are determined for the two consecutive sequential image frames $x_{t-1}$ and $x_t$. From the semantic segmentation module 26 the semantic segmentation prediction $y_{t-1}$ of image frame $x_{t-1}$ is fed to the image warping submodule 28 while the semantic segmentation prediction $y_t$ of image frame $x_t$ is fed to the evaluating module 29.

In the image warping submodule 28 the optical flow ut calculated between xt and $x_{t-1}$ is used to warp the prediction of the semantic segmentation $y_{t-1}$ from time t-1 to time t, resulting in an expected segmentation output $\hat{y}_t$ which is also fed to the evaluating module 29. In the evaluating module 29 the temporal consistency TCt of the semantic segmentation prediction is calculated, and, if desired, averaged for all pairs of consecutive images in the considered video sequence to obtain a value for the mean temporal consistency. Finally, the calculated data are made available for further processing via an output of apparatus 20.

The image propagation module 25, the semantic segmentation module 26 and the evaluating module 29 may be controlled by a not depicted controller and can be embodied as dedicated hardware units. Of course, they may likewise be fully or partially combined into a single unit or implemented as software running on a processor, e.g. a CPU or a GPU.

Figure 3 schematically shows a top view of a vehicle 31 in which automated driving or driver assistance functions may use the evaluation of temporal characteristics of semantic image segmentation in a perception system of a so-called observer according to the invention. The vehicle 31 can in particular be a passenger car or a truck.

The vehicle comprises an apparatus 20 for evaluating temporal characteristics of semantic image segmentation as described above, which can be designed, for example, as a control unit of the vehicle 31 and can have one or more microcontrollers or microprocessors.

In addition, the vehicle comprises at least one vehicle camera 21, which captures the vehicle surroundings of the vehicle, e.g. a front camera, a rear camera and/or side cameras. The image or video data generated by the one or more vehicle cameras are fed via a digital data bus 32 in the vehicle to the apparatus 20, which processes the image data of the image frames as described above in order to evaluate the temporal characteristics of the semantic image segmentation:

Furthermore, the vehicle may also have at least one further sensor 33 such as a Radar or LiDAR sensor, with which the vehicle surroundings can be detected and the distance between the vehicle and objects in the vehicle surroundings can be determined. For localizing the vehicle a navigation unit 34 may receive GPS signals and, possibly, also analyze high-precision map data and sensor-supported detection of landmarks in the vehicle's surroundings.

In the vehicle 31, a perception module 35 is also provided which, based on the obtained segmentation data, sensor data and position data detects, classifies and tracks objects in the vehicle surrounding and provides this information to an assistance unit 36.

Assistance unit 36 provides based on this information and other data and parameter of the vehicle such as the current position, speed and acceleration of the vehicle assistance functions such as automatic longitudinal and lateral guidance of the vehicle.

Furthermore, data about current weather or weather conditions can also be taken into account, which can be recorded by suitable sensors in the vehicle or can also be supplied to the vehicle externally. For example, the current outside temperature can be determined with an outside temperature sensor in the vehicle, while data on the current wind conditions are received via a mobile data radio link.

In addition, the vehicle can have further components, not shown. For example, the vehicle can also be equipped with an on-board connectivity module, which can be used for mobile communication with a backend server for exchanging data.

Figure 4 schematically illustrates a backend system 41 where temporal consistency is used for selecting additional training data. Image or video data captured by camera 21 are to a testing unit 42 and in parallel to a database with training data 44. In the testing unit 42 the semantic segmentation network is tested by evaluating the semantic segmentation predictions with respect to their temporal characteristics as described above.

In a decision unit 43, the value of the mean temporal consistency is analyzed. Instances with a low value of the mean temporal consistency are identified as candidates for additional training data and are output from the database 44 for human labeling. This can be done fully unsupervised. Within testing and validation of perception functions, the suggested backend system can be used to measure relevant metrics for the safety argument. For this purpose, the backend system can also measure and aggregate the temporal coherence of a network with respect to contextual influences, e.g. conditioned to weather and lighting conditions or the complexity of the scene.

**Reference numerals**

| | |
|---|---|
| 10 | Receiving image data of two sequential image frames |
| 11 | Determining semantic segmentation predictions |
| 12 | Estimating displacements |
| 13 | Applying estimated displacements to generate expected semantic segmentation prediction |
| 14 | Evaluating semantic segmentation prediction |
| 15 | Comparing with threshold value |
| 16, 17 | Further processing steps depending on comparison |
| 20 | Apparatus |
| 21 | Camera |
| 22 | Video sequence |
| 23, 24 | Image content |
| 24 | Aligning module |
| 25 | Image propagation module |
| 26 | Semantic segmentation module |
| 27 | Optical flow submodule |
| 28 | Image warping submodule |
| 29 | Evaluating module |
| 31 | Vehicle |
| 32 | Digital data bus |
| 33 | Further sensor |
| 34 | Navigation unit |
| 35 | Perception module |
| 34 | Assistance unit |
| 34 | Navigation unit |
| 41 | Backend system |
| 42 | Testing unit |
| 43 | Decision unit |
| 44 | Database |

**Claims**

1. Method for evaluating temporal characteristics of semantic image segmentation, comprising:

    - receiving (10) image data of two sequential image frames;
    - determining (11) semantic segmentation predictions for each of the two sequential image frames;
    - estimating (12) displacements between the image data of the two sequential image frames;

- applying (13) the estimated displacements to the semantic segmentation prediction of the first of the two sequential image frames to generate an expected semantic segmentation prediction for the second of the two sequential image frames; and
- evaluating (14) the semantic segmentation prediction of the second of the two sequential image frames based on the expected semantic segmentation prediction for the second of the two sequential image frames.

**2.** The method according to claim 1, wherein estimating (12) the displacements comprises determining for each pixel a two-dimensional pixel-wise displacement from the first of the two sequential image frames to the second of the two sequential image frames; and wherein these pixel-wise displacements are applied to the pixel coordinates of the segmentation output to generate the expected semantic segmentation prediction.

**3.** The method according to claim 1 or 2, wherein the two sequential image frames are two immediately consecutive images of a video sequence.

**4.** The method according to any of claims 1 to 3, wherein evaluating (14) the semantic segmentation prediction comprises calculating a value of the instantaneous temporal consistency of the semantic segmentation predictions of the two sequential image frames.

**5.** The method according to claim 4, wherein calculating the instantaneous temporal consistency comprises calculating the mean intersection over union between the semantic segmentation prediction of the second of the two sequential image frames and the expected semantic segmentation prediction for the second of the two sequential image frames.

**6.** The method according to claim 5, wherein a value for the mean temporal consistency is calculated for several pairs of consecutive images in a video sequence based on the individual values of instantaneous temporal consistency.

**7.** The method according to claim 6, further comprising comparing (15) the value for the mean temporal consistency with a threshold value.

**8.** The method according to claim 7, wherein the semantic segmentation predictions are used in a perception system for automated driving functions of a vehicle if the value for the mean temporal consistency exceeds the threshold value.

**9.** The method according to claim claim 7 or claim 8, wherein at least one of the following actions is performed, if the value for the mean temporal consistency is lower than the threshold value:

- discarding the current semantic segmentation predictions;
- adding an uncertainty value for the further processing;
- relying on another component for perception in the vehicle;
- identifying perception errors.

**10.** The method according to any of claims 7 to 9, wherein image frames or video sequences with a value for the mean temporal consistency being lower than the threshold value are identified for human labeling or as training data with critical temporal consistency.

**11.** A computer program comprising instructions which, when executed by a computer, cause the computer to perform a method according to any of claims 1 to 10.

**12.** An apparatus (20) for evaluating temporal characteristics of semantic image segmentation, the apparatus (20) comprising:

- an input configured to receive image data of two sequential image frames;
- a semantic segmentation module (26) configured to determine semantic segmentation predictions for each of the two sequential image frames;
- an image propagation module (25) configured to estimate displacements between the image data of the two sequential image frames and to apply the estimated displacements to the semantic segmentation prediction of the first of the two sequential image frames to generate an expected semantic segmentation prediction for the second of the two sequential image frames; and
- an evaluating module (29) configured to evaluate the semantic segmentation prediction of the second of the two sequential image frames based on the expected semantic segmentation prediction for the second of the two sequential image frames.

**13.** An in-car control unit, wherein the in-car control unit comprises an apparatus according to claim 12 or is configured to perform a method according to any of claims 1 to 9.

**14.** A backend system, wherein the backend system (41) comprises an apparatus according to claim 12 or is configured to perform a method according to any of claims 1 to 7 or 10.

**15.** A vehicle (31), wherein the vehicle (31) comprises an in-car control unit according to claim 13.

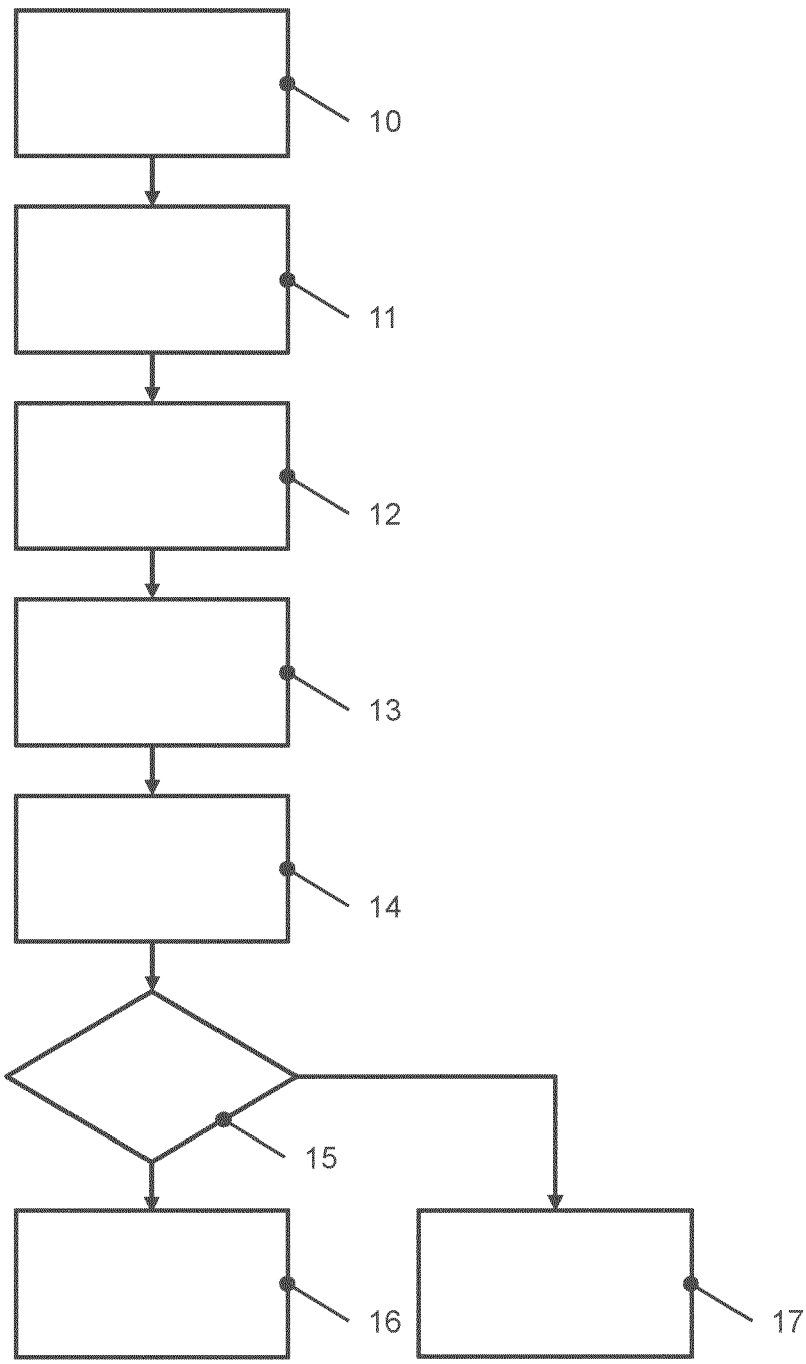


FIG. 1

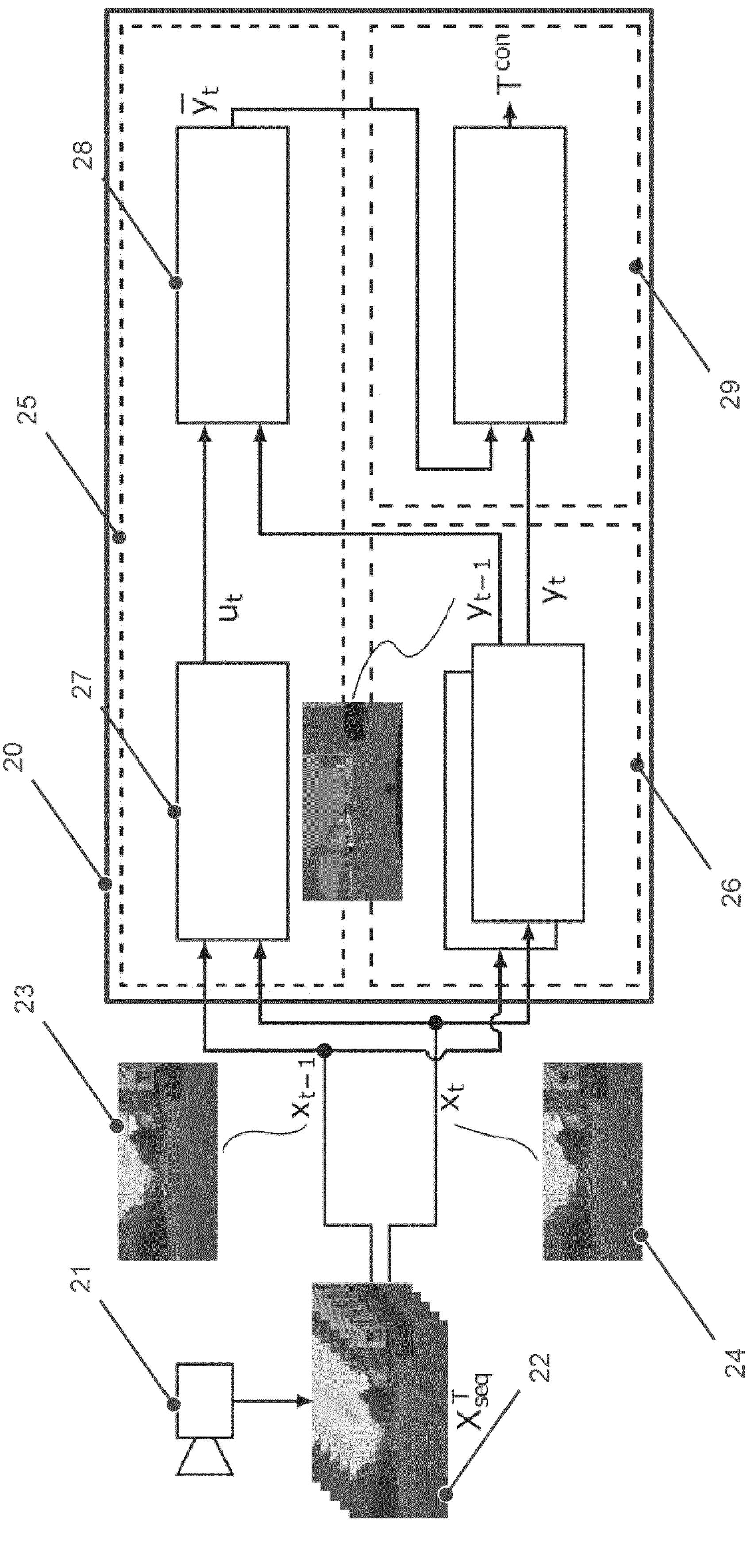


FIG. 2

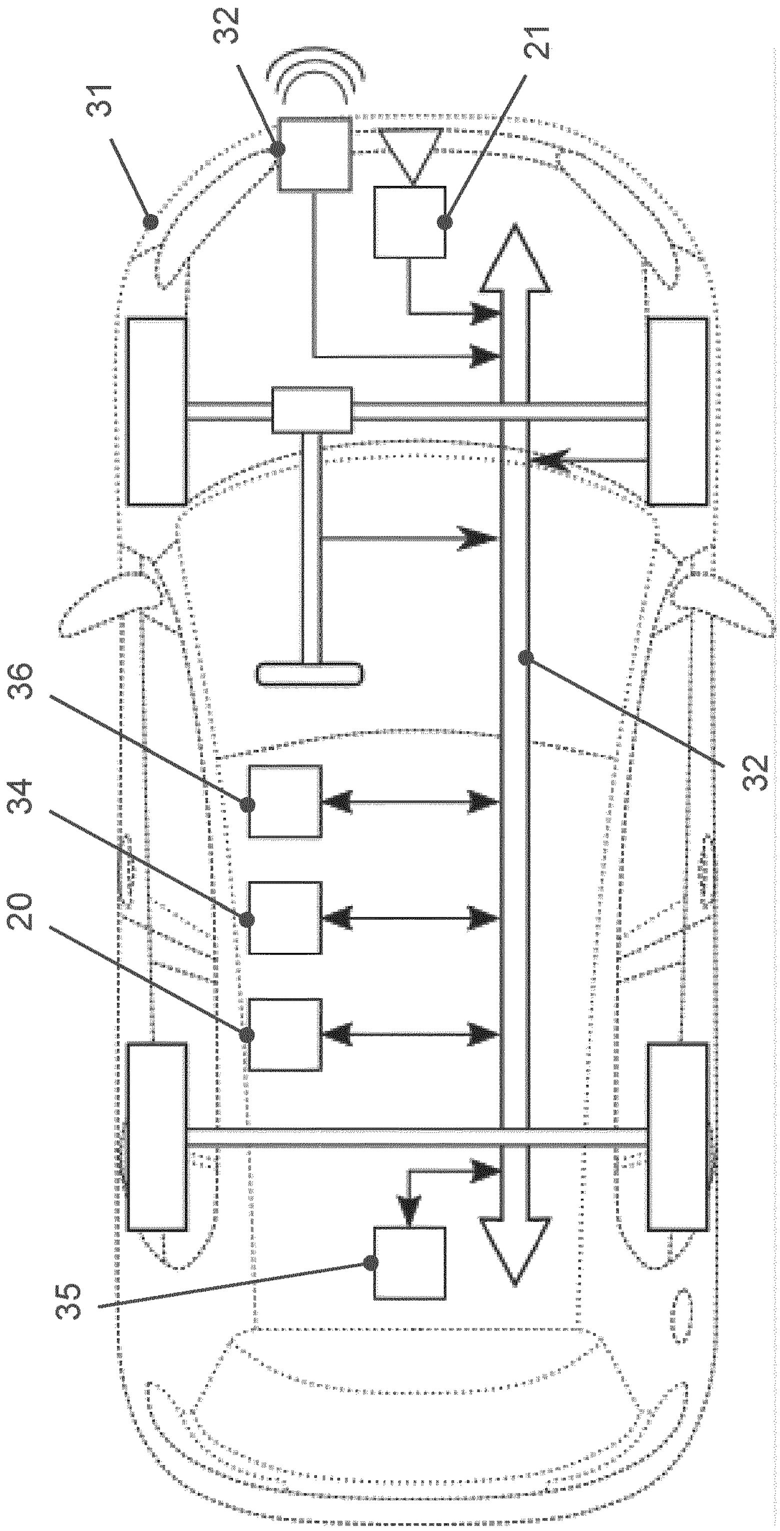


FIG. 3

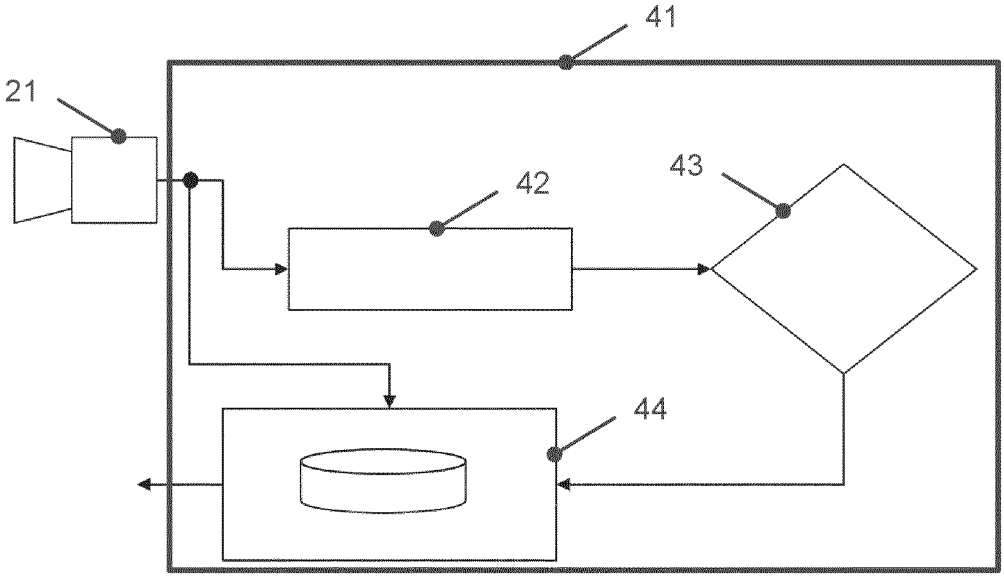


FIG. 4

Europäisches Patentamt
European Patent Office
Office européen des brevets

# EUROPEAN SEARCH REPORT

Application Number
EP 20 20 4764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIN FEIYU ET AL: "Improving Semantic Segmentation via Label Propagation and Temporal Consistency", 2019 IEEE INTERNATIONAL CONFERENCE ON SIGNAL, INFORMATION AND DATA PROCESSING (ICSIDP), IEEE, 11 December 2019 (2019-12-11), pages 1-5, XP033813596, DOI: 10.1109/ICSIDP47821.2019.9173474 [retrieved on 2020-08-20] | 1-4,11, 12 | INV. G06T7/11 G06T7/215 |
| Y | * figure 1 * * abstract * * section II * ----- | 5-10, 13-15 | |
| Y | MOHAMMAD HAJIZADEH SAFFAR ET AL: "Semantic Video Segmentation: A Review on Recent Approaches", ARXIV.ORG, CORNELL UNIVERSITY LIBRARY, 201 OLIN LIBRARY CORNELL UNIVERSITY ITHACA, NY 14853, 16 June 2018 (2018-06-16), XP081238558, * section 2.2.3 * ----- | 5-10 | TECHNICAL FIELDS SEARCHED (IPC) |
| Y | SIAM MENNATULLAH ET AL: "Deep semantic segmentation for automated driving: Taxonomy, roadmap and challenges", 2017 IEEE 20TH INTERNATIONAL CONFERENCE ON INTELLIGENT TRANSPORTATION SYSTEMS (ITSC), IEEE, 16 October 2017 (2017-10-16), pages 1-8, XP033330377, DOI: 10.1109/ITSC.2017.8317714 [retrieved on 2018-03-14] * abstract * * figure 1 * ----- | 8-10, 13-15 | G06T |

-/--

The present search report has been drawn up for all claims

1

| Place of search | Date of completion of the search | Examiner |
|---|---|---|
| Munich | 26 March 2021 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 20 20 4764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | VARGHESE SERIN ET AL: "Unsupervised Temporal Consistency Metric for Video Segmentation in Highly-Automated Driving", 2020 IEEE/CVF CONFERENCE ON COMPUTER VISION AND PATTERN RECOGNITION WORKSHOPS (CVPRW), IEEE, 14 June 2020 (2020-06-14), pages 1369-1378, XP033799076, DOI: 10.1109/CVPRW50498.2020.00176 [retrieved on 2020-07-27] * the whole document * ----- | 1-15 | |
| | | | TECHNICAL FIELDS SEARCHED (IPC) |

1

The present search report has been drawn up for all claims

| Place of search | Date of completion of the search | Examiner |
|---|---|---|
| Munich | 26 March 2021 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20190225234 A1


### Non-patent literature cited in the description


- Dense Point Trajectories by GPU-Accelerated Large Displacement Optical Flow. **SUNDARAM N. ; BROX T. ; KEUTZER K.** European Conference on Computer Vision (ECCV). Springer, 2010, vol. 6311, 438-451
- **A. KUNDU ; V. VINEET ; V. KOLTUN.** Feature Space Optimization for Semantic Video Segmentation. *Proc. of Computer Vision and Pattern Recognition (CVPR) 2016,* June 2016, 3168-3175